# EUROPEAN PATENT SPECIFICATION

(11) **EP 2 028 922 B1**
(45) Date of publication and mention of the grant of the patent: **15.02.2012**
(21) Application number: 07764598.4
(22) Date of filing: 08.06.2007
(51) Int. Cl.: A01G 9/16, A01G 9/20

(54) **MODULAR CONTAINER FOR BEDDER GERMINATION AND/OR STORAGE**
MODULARER BEHÄLTER FÜR KEIMUNG UND/ODER LAGERUNG VON GOLDLACKPFLANZEN
CONTENANT MODULAIRE POUR LA GERMINATION ET/OU LE STOCKAGE DE GIROFLÉES

(30) Priority: 15.06.2006 IT PD20060246
(43) Date of publication of application: 04.03.2009
(73) Proprietor: Sgaravatti Trend S.r.l., 35020 Ponte San Nicoló (IT)
(72) Inventor: SGARAVATTI, Antonio, 35134 Padova (IT)
(74) Representative: Modiano, Micaela Nadia
(86) International application number: PCT/EP2007/005095
(87) International publication number: WO 2007/144117

(56) References cited:
- WO-A-81/01941
- NL-C2- 1 019 767
- US-A- 1 959 510
- US-A- 3 082 575
- US-A- 4 236 350
- US-A- 4 291 494

## Description

### Technical Field

The present invention relates to a modular container for bedder germination and/or storage.

### Background Art

As is known, germinators consist generally of large box-like containers inside which plants in general are grown on a suitable culture medium; in practice, they consist of plant incubators, with walls and a top made of transparent material in order to allow the light to reach the interior.

When a plant inside the germinator develops from a seed into a bedder of a given size, the bedder is transferred into soil.

Typically, if the bedder is to be sold, it is transplanted into a pot and placed in a display environment.

If the display environment does not coincide with the nursery where the bedder was grown, the bedder must be transferred to the point of sale.

Generally, the bedder, before being sold, spends some time in the display environment; here, appropriately fed and protected, its growth process continues.

Storage of the bedders before sale is very costly in terms of space.

The pots that contain the bedders in fact can be distributed only on one surface.

When it is necessary to utilize the space vertically, it is necessary to prepare bulky shelving, such as to allow to support the pots, and the maneuvering space around them in order to be able to water them, usually reaching an arrangement which entails a considerable waste of space.

Moving the bedders also entails problems linked to the storage space.

The bedders in fact must be handled and arranged on crates which are deep enough to allow stacking with other creates and sufficiently open laterally to allow correct ventilation.

From what has, been described above, it is evident that the movement and storage of bedders is onerous in terms of manual operations to be performed (loading and unloading of each individual bedder in a pot from the crates, arrangement on the display surfaces, feeding, et cetera) both in terms of space and in terms of equipment required.

Document US 4 291 494 teaches a portable greenhouse with a base connected to the lower part of a tray that can contain soil and having a transparent cover. The cover is arranged under the base for storing and engaging the border of the tray to form the greenhouse.

### Disclosure of the Invention

The aim of the present invention is to provide a modular container for bedder germination and/or storage which solves the drawbacks noted above.

Within this aim, an object of the present invention is to provide a modular container for bedder germination and/or storage which allows to optimize the space available in nurseries, points of sale and during transport.

Another object of the present invention is to provide a modular container for bedder germination and/or storage which is structurally simple and easy to use.

Another object of the present invention is to provide a modular container which provides internally an ideal microclimate for bedder germination and growth.

Another object of the present invention is to provide a modular container for bedder germination and/or storage which can be manufactured with known systems and technologies.

This aim and these and other objects, which will become better apparent hereinafter, are achieved by a modular container for bedder germination and/or storage according to the invention, that has the features set forth in claim 1.

### Brief description of the Drawings

Further characteristics and advantages of the invention will become better apparent from the following detailed description of a preferred but not exclusive embodiment thereof, illustrated by way of nonlimiting example in the accompanying drawings, wherein:
Figure 1 is a perspective view of a container according to the invention in a first configuration related to a step for preliminary storage of the container;
Figure 2 is a sectional side view, taken along a central plane, of the container in the configuration of Figure 1;
Figure 3 is a sectional side view, taken along a central plane, of the container in a second configuration related to the active step for culture inside the container;
Figure 4 is a sectional side view of a corner detail of the container in the configuration of Figure 3;

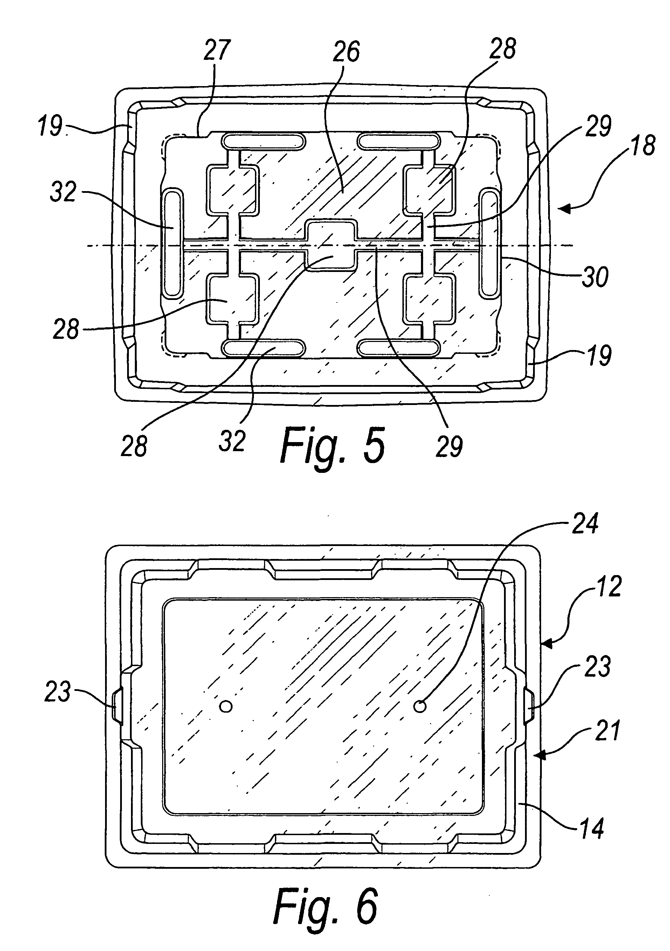

Figure 5 is a top view of the third module of the container according to the invention;
Figure 6 is a top view of the second module of the container according to the invention.

### Ways of carrying out the Invention

With reference to the figures, a modular container for bedder germination and/or storage according to the invention is generally designated by the reference numeral 10.

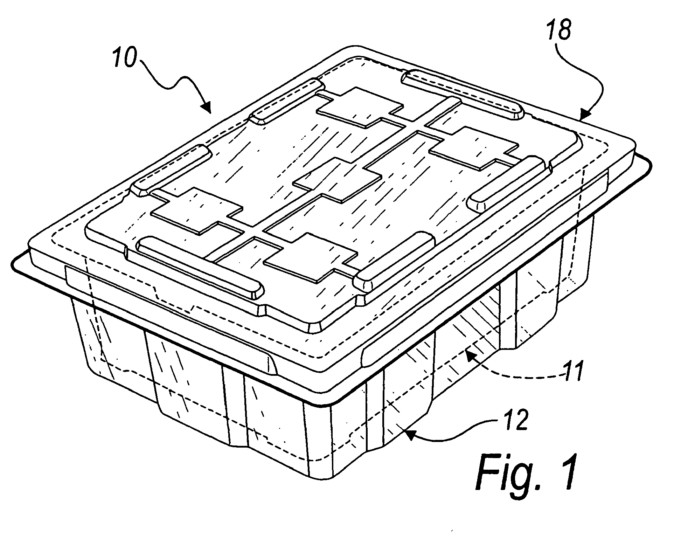

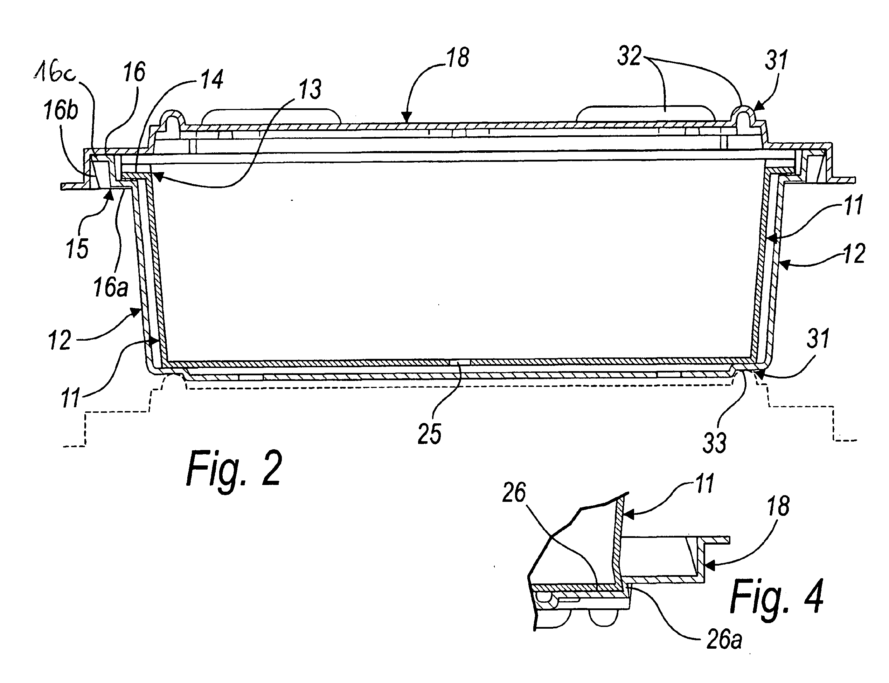

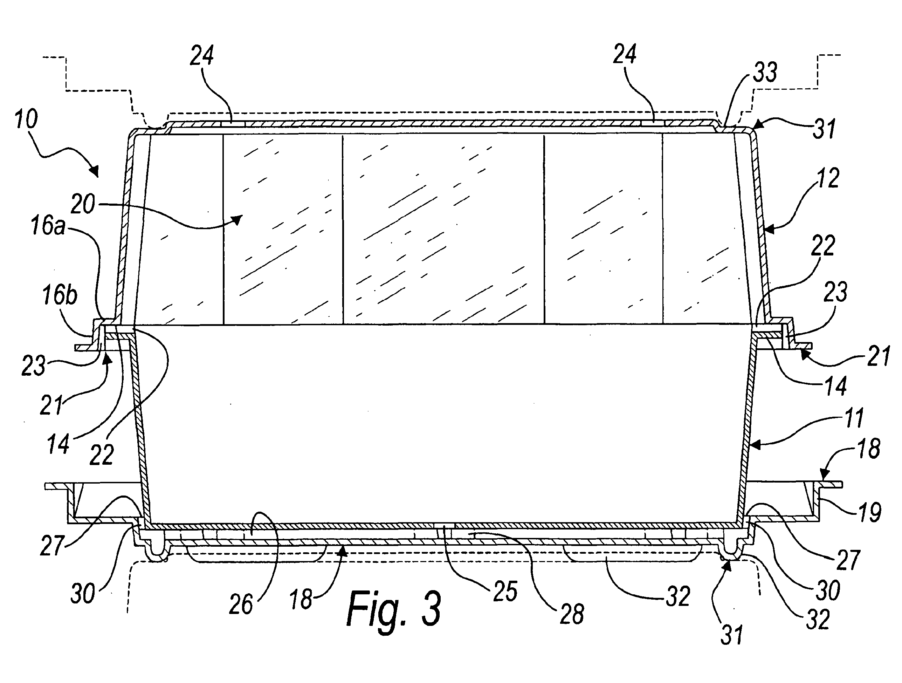

The modular container 10 is composed of three distinct modules, described hereinafter, which can be assembled according to two distinct configurations, respectively a first configuration (Figures 1 and 2) which relates to a step of preliminary storage of the container 10 and a second configuration (Figure 3) related to the active step of culture inside the container; said three modules are preferably made of plastics.

The first configuration is described first of all hereafter.

Of these three modules, a first one is constituted by a first tray 11, inside which the culture medium (soil, peat, et cetera) with the seeds is placed for the active step of germination.

The first tray 11, in this embodiment, has a rectangular profile in plan view.

A second module is constituted by a second tray 12, which is made of substantially transparent material and contains, in this first configuration for preliminary storage of the container 10, the first tray 11.

The second tray 12 also has, in this embodiment, a rectangular profile in plan view and its interior is substantially complementary to the outside contour of the first tray 11, so as to be able to contain it completely.

The upper rim 13 of the first tray 11 extends laterally so as to form a first substantially horizontal perimetric band 14.

The upper end portion 15 of the second tray 12 extends outward, forming a step-like transverse abutment and containment contour for the first perimetric band 14; in particular, the upper end portion 15 is composed of a second perimetric band 16a, which is substantially horizontal and on which the first perimetric band 14 of the first tray 11 rests; a rising portion 16b, which surrounds said first perimetric band 16; and a third substantially horizontal perimetric band 16c.

A third module is constituted by a plate-like element 18 which provides the lid for closing the second tray 12.

The plate-like element 18 has contoured raised lateral rims 19 for reversible interlocking coupling with the third perimetric band 16c of the second tray 12.

Such first configuration of the container 10 is useful for storing it when it is not being used as a bedder germinator or storage container, since it has a smaller space occupation with respect to the case of "active" use of said container, as shown hereinafter.

Figure 3 shows the second configuration of the modular container 10; this configuration is to be understood as an "active" one, since it relates to the step for germination of bedders or to their storage in the container.

In this second configuration, the second tray 12 is overturned onto the first tray 11 with its opening directed toward the opening of the first tray 11, in practice so as to delimit a germination and culture space 20.

In particular, the upper end portion 15 of the second tray 12 forms a reversible interlocking coupling with the first perimetric band 14 of the first tray 11; in practice, the second perimetric band 16a rests against the first perimetric band 14 of the first tray 11 and the rising portion 16b surrounds the first perimetric band 14.

In order to allow correct ventilation of the germination and culture space 20, passages 21 for ventilating the space 20 are associated with the first tray 11 and the second tray 12.

For example, the ventilation passages 21 are composed of the combination of recesses 22 formed on two portions of the first perimetric band 14 provided on mutually opposite sides of the first tray 11, with corresponding wider regions 23 formed on two portions of the rising portion 16b formed on the mutually opposite sides of the second tray 12.

On the top of the second tray 12 (the bottom of the tray, when assembled in the first configuration) there are also through holes 24 which cooperate to the ventilation of the germination and culture space 20.

The plate-like element 18 that forms the lid of the second tray 12 when assembled in the first configuration, now, in the second configuration, constitutes a pot saucer for the first tray 11; the tray is in fact provided, on its bottom, with through holes 25 (in Figures 2 and 3, only one is shown) useful for the passage of water from the pot saucer to the culture medium contained in the first tray 11.

In particular, the plate-like element 18 has, on the face to be arranged in contact with the bottom of the first tray 11, a recessed surface 26 the rim profile 27 of which, in plan view, is substantially shaped complementarily to the profile in plan view of the bottom of the first tray 11, thus allowing stable positioning of the first tray on the pot saucer.

Hollows 28 are formed on the recessed surface 26 and in this second configuration are centered at the through holes 25 formed in the bottom of the first tray 11.

Channels 29 connect the hollows 28 to chutes 30 for supplying water, which are formed on the edge of the rim profile 27, in plan view, of the recessed surface 26.

As clearly shown in Figure 4, the corner portions 26a of the profile of the recessed surface 26 have an undercut shape which is complementary to the corresponding corner regions of the bottom of the first tray 11, so as to form a stable extraction-preventing coupling which is reversible by elastic deformation of the coupled parts.

Advantageously, in order to allow stacked storage of the containers 10 both when they are assembled in the second configuration and in the first configuration, the container is provided with reference means 31 for stacking which are formed on the face of the plate-like element 18 that is directed outward when assembled in the first configuration and on the outer part of the bottom of the second tray 12.

For example, the reference means 31 for stacking are constituted by perimetric studs 32 which protrude downward from the plate-like element 18, substantially so as to follow the profile of the recessed surface 26 and by a complementary perimetric recess 33, which is formed on the outer part of the bottom of the second tray 12, on which the perimetric studs 32 are arranged.

In practice it has been found that the invention thus described achieves the intended aim and objects.

A structurally simple container has in fact been provided which allows the germination and growth of bedders inside it without the need for transfers of said bedders into pots, with consequent convenience in transport and storage.

The bedders can in fact grow comfortably within the container, since they can be fed by means of the water collected in the plate-like element that acts as a pot saucer.

At the same time, the containers, when they are in the second configuration, can be stacked on each other, thus allowing optimization of the available space.

The invention thus conceived is susceptible of numerous modifications and variations, all of which are within the scope of the appended claims; all the details may further be replaced with other technically equivalent elements.

In practice, the materials employed, so long as they are compatible with the specific use, as well as the dimensions, may be any according to requirements and to the state of the art.

## Claims

1. A modular container for bedder germination and/or storage, comprising at least three distinct modules which can be assembled according to two distinct configurations, respectively a first configuration related to a step of preliminary storage of the container (10) and a second configuration related to the active step of culture inside the container (10), of said at least three modules:
- a first module being constituted by a first tray (11) which is adapted to contain the culture medium, at least one through hole (25) being provided in the bottom of said first tray (11);
- a second module being constituted by a second substantially transparent tray (12), said second tray (12), when assembled in said first configuration, being adapted to contain said first tray (11), and, when assembled in said second configuration, said second tray (12) being inverted over said first tray (11) so that its opening is directed toward the opening of said first tray (11) so as to delimit a germination and culture space (20), passages (21) for ventilation of said germination and culture space (20) being associated with said first tray (11) and/or said second tray (12);
- a third module being constituted by a plate-like element (18) which is suitable to provide, when assembled in said first configuration, the lid for closing said second tray (12), said plate-like element (18) being adapted to provide, when assembled in said second configuration, a pot saucer for said first tray (11) which cooperates with said at least one through hole (25) formed in the bottom of said first tray (11), **characterized in that** it further comprises reference means (31) for stacking which are formed on the face of said plate-like element (18) that is directed outward when assembled in the first configuration and on the outer part of the bottom of said second tray (12), said reference means (31) for stacking comprising perimetric studs (32) which protrude downward, with reference to the second configuration, from said plate-like element (18), and a complementary perimetric recess (33) formed on the outer part of the bottom of said second tray (12), on which said perimetric studs (32) are arranged.

2. The modular container for bedder germination and/or storage according to claim 1 , **characterized in that** said plate-like element (18) has, on the face to be arranged in contact with the bottom of said first tray (11), a recessed surface (26) the rim profile (27) of which, in plan view, is shaped substantially complementarily to the profile, in plan view, of said bottom of said first tray (11), at least one hollow (28) being formed on said recessed surface (26), said hollow, in said second configuration, being centered at said at least one through hole (25) formed in the bottom of said first tray (11), said at least one hollow (28) being connected, by means of at least one channel (29), to at least one chute (30) for supplying water which is formed on the edge of the rim profile (27), in plan view, of said recessed surface (26).

3. The modular container for bedder germination and/or storage according to one of the preceding claims, **characterized in that** the plate-like element (18) has raised lateral rims (19) which are contoured for reversible interlocking coupling with the upper end portion (15) of said second tray (12).

4. The modular container for bedder germination and/or storage according to one of the preceding claims, **characterized in that** the upper edge (13) of said first tray (11) extends laterally so as to form a first substantially horizontal perimetric band (14), the upper end portion (15) of said second tray (12) protruding outward, forming a transverse step-like abutment and containment contour for said first perimetric band (14).

5. The modular container for bedder germination and/or storage according to claim 4, **characterized in that** said upper end portion (15) is composed of a second perimetric band (16a) which is substantially horizontal and on which said first perimetric band (14) of said first tray (11) rests; a rising portion (16b), which surrounds said first perimetric band (16); and a third substantially horizontal perimetric band (16c).

6. The modular container for bedder germination and/or storage according to claim 5, **characterized in that** said passages (21) for ventilation of said germination and culture space (20) are composed of the combination of recesses (22) formed on two portions of said first perimetric band (14) formed on opposite sides of said first tray (11), with corresponding wider regions (23) which are formed on two portions of said rising portion (16b), which are formed on the mutually opposite sides of said second tray (12).

7. The modular container for bedder germination and/or storage according to one or more of the preceding claims, **characterized in that** said passages (21) for ventilation of said germination and culture space (20) comprise at least one through hole (24) which is formed in the top of said second tray (12), which corresponds to the bottom of said second tray with reference to the first configuration.

8. The modular container for bedder germination and/or storage according to one or more of the preceding claims, **characterized in that** said first tray (11), said second tray (12) and said plate-like element (18) have a rectangular profile in plan view.

9. The modular container for bedder germination and/or storage according to claim 2, **characterized in that** corner portions (26a) of said profile of the recessed surface (26) have an undercut configuration which is complementary to the corresponding corner regions of the bottom of said first tray (11) which is adapted to form a stable extraction-preventing coupling which is reversible by elastic deformation of the coupled parts.

## Patentansprüche

1. Ein modularer Behälter für Keimung und/oder Aufbewahrung von Setzlingen, umfassend mindestens drei verschiedene Module, die gemäß zwei verschiedener Konfigurationen zusammengesetzt werden können, und zwar einer ersten Konfiguration, die mit einem Schritt einer vorbereitenden Aufbewahrung des Behälters (10) in Beziehung steht, und einer zweiten Konfiguration, die zu dem aktiven Schritt einer Züchtung im Inneren des Behälters (10) in Beziehung steht, wobei von den mindestens drei Modulen:
- ein erstes Modul durch eine erste Schale (11) gebildet ist, die ausgebildet ist, um das Kulturmedium zu enthalten, wobei mindestens ein Durchgangsloch (25) im Boden der ersten Schale (11) vorgesehen ist;
- ein zweites Modul durch eine zweite im Wesentlichen transparente Schale (12) gebildet ist, wobei die zweite Schale (12), wenn sie in der ersten Konfiguration zusammengesetzt ist, ausgebildet ist, um die erste Schale (11) zu enthalten, und, wenn sie in der zweiten Konfiguration zusammengesetzt ist, die zweite Schale (12) über der ersten Schale (11) umgewendet ist, so dass ihre Öffnung in Richtung zur Öffnung der ersten Schale (11) gerichtet ist, so dass ein Keimungs und Züchtungsraum (20) begrenzt wird, wobei Durchgänge (21) für eine Belüftung des Keimungs- und Züchtungsraums (20) der ersten Schale (11) und/oder der zweiten Schale (12) zugehörig sind;
- ein drittes Modul, das durch ein plattenartiges Element (18) gebildet ist, das geeignet ist, wenn es in der ersten Konfiguration zusammengesetzt ist, den Deckel für ein Verschließen der zweiten Schale (12) bereitzustellen, wobei das plattenartige Element (18) ausgebildet ist, um, wenn es in der zweiten Konfiguration zusammengesetzt ist, einen Unterteller für die erste Schale (11) bereitzustellen, der mit dem mindestens einen Durchgangsloch (25) zusammenarbeitet, das in dem Boden der ersten Schale (11) ausgebildet ist, **dadurch gekennzeichnet, dass** es weiter Referenzeinrichtungen (31) für ein Übereinanderstapeln aufweist, die auf der Seite des plattenartigen Elementes (18) ausgebildet sind, welche nach außen gerichtet ist, wenn ein Zusammenbau in der ersten Konfiguration vorliegt, und auf dem Außenteil des Bodens der zweiten Schale (12) ausgebildet sind, wobei die Referenzeinrichtungen (31) zum Übereinanderstapeln rundum verlaufende hervorstehende Elemente (32) aufweisen, die nach unten, bezüglich der zweiten Konfiguration, aus dem plattenartigen Element (18) vorstehen, und eine ein Gegenstück bildende, rundum verlaufende Vertiefung (33) auf dem äußeren Teil des Bodens der zweiten Schale (12) ausgebildet ist, auf dem die rundum verlaufenden hervorstehenden Elemente (32) angeordnet sind.

2. Der modulare Behälter für eine Keimung und/oder Aufbewahrung von Setzlingen nach Anspruch 1, **dadurch gekennzeichnet, dass** das plattenartige Element (18), auf der Seite, die in Kontakt mit dem Boden der ersten Schale (11) anzuordnen ist, eine vertiefte Fläche (26) aufweist, deren Randprofil (27) , in der Draufsicht, im Wesentlichen als Gegenstück zum Profil, in der Draufsicht, des Bodens der ersten Schale (11) geformt ist, wobei mindestens ein Hohlraum (28) auf der vertieften Fläche (26) ausgebildet ist, wobei der Hohlraum, in der zweiten Konfiguration, bei dem mindestens einen Durchgangsloch (25) zentriert ist, das im Boden der ersten Schale (11) ausgebildet ist, wobei der mindestens eine Hohlraum (28), mittels mindestens eines Kanals (29), mit mindestens einer Schütte (30) zur Zufuhr von Wasser versehen ist, der auf der Kante des Randprofils (27), in der Draufsicht, der vertieften Fläche (26) vorgesehen ist.

3. Der modulare Behälter für eine Keimung und/oder Aufbewahrung von Setzlingen nach einem der vorhergehenden Ansprüchen, **dadurch gekennzeichnet, dass** das plattenartige Element (18) erhabene seitliche Ränder (19) aufweist, die für eine reversibel sperrende Verbindung mit dem oberen Endabschnitt (15) der zweiten Schale (12) profiliert sind.

4. Der modulare Behälter für eine Keimung und/oder Aufbewahrung von Setzlingen nach einem der vorhergehenden Ansprüchen, **dadurch gekennzeichnet, dass** die obere Kante (13) der ersten Schale (11) sich seitlich so erstreckt, dass ein erstes im Wesentlichen horizontales, rundum verlaufendes Band (14) gebildet wird, wobei der obere Endabschnitt (15) der zweiten Schale (12) nach außen vorsteht, und er ein in Querrichtung verlaufendes stufenartiges Widerlager und Eingrenzungsprofil für das erste rundum verlaufende Band (14) bildet.

5. Der modulare Behälter für eine Keimung und/oder Aufbewahrung von Setzlingen nach Anspruch 4, **dadurch gekennzeichnet, dass** der obere Endabschnitt (15) besteht aus: einem zweiten rundum verlaufenden Band (16a), das im Wesentlichen horizontal ist und auf dem das erste rundum verlaufende Band (14) der ersten Schale (11) aufliegt; einem ansteigenden Abschnitt (16b), der das erste rundum verlaufende Band (16) umgibt; und einem dritten im Wesentlichen horizontalen, rundum verlaufenden Band (16c).

6. Der modulare Behälter für eine Keimung und/oder Aufbewahrung von Setzlingen nach Anspruch 5, **dadurch gekennzeichnet, dass** die Durchgänge (21) für eine Belüftung des Keimungs- und Züchtungsraums (20) bestehen aus der Kombination von Vertiefungen (22), die auf zwei Abschnitten des ersten rundum verlaufenden Bandes (14) ausgebildet sind, welche auf gegenüberliegenden Seiten der ersten Schale (11) ausgebildet sind, mit entsprechenden breiteren Gebieten (23), die auf zwei Abschnitten des ansteigenden Abschnittes (16b) ausgebildet sind, die auf den einander gegenüberliegenden Seiten der zweiten Schale (12) ausgebildet sind.

7. Der modulare Behälter für eine Keimung und/oder Aufbewahrung von Keimlingen nach einem oder mehreren der vorhergehenden Ansprüche, **dadurch gekennzeichnet, dass** die Durchgänge (21) für eine Belüftung des Keimungs- und Züchtungsraums (20) mindestens ein Durchgangsloch (24) aufweisen, das im Oberteil der zweiten Schale (12) ausgebildet ist, welches dem Boden der zweiten Schale bezüglich der ersten Konfiguration entspricht.

8. Der modulare Behälter für eine Keimung und/oder Aufbewahrung von Setzlingen nach einem oder mehreren der vorhergehenden Ansprüche, **dadurch gekennzeichnet, dass** die erste Schale (11), die zweite Schale (12) und das plattenartige Element (18) in der Draufsicht ein Rechteckprofil haben.

9. Der modulare Behälter für eine Keimung und/oder Aufbewahrung von Setzlingen nach Anspruch 2, **dadurch gekennzeichnet, dass** Eckabschnitte (26a) des Profils der vertieften Fläche (26) eine hinterschnittene Konfiguration aufweisen, die ein Gegenstück zu den entsprechenden Eckabschnitten des Bodens der ersten Schale (11) bilden, und die ausgebildet ist, um eine stabile, ein Herausziehen verhindernde Verbindung zu bilden, welche durch eine elastische Verformung der verbundenen Teile reversibel ist.

## Revendications

1. Contenant modulaire pour la germination et/ou le stockage de giroflées, comportant au moins trois modules distincts qui peuvent être assemblés selon deux configurations distinctes, respectivement une première configuration se rapportant à une étape de stockage préliminaire du contenant (10) et une seconde configuration se rapportant à l'étape active de la culture à l'intérieur du contenant (10), parmi lesdits au moins trois modules :
- un premier module constitué d'un premier plateau (11) lequel est adapté pour contenir le milieu de culture, le fond du premier plateau (11) comportant au moins un trou traversant (25),
- un deuxième module constitué d'un second plateau sensiblement transparent (12), ledit second plateau (12), lorsqu'il est assemblé dans ladite première configuration, étant adapté pour contenir ledit premier plateau (11), et, lorsqu'il est assemblé dans ladite seconde configuration, ledit second plateau (12) étant renversé sur ledit premier plateau (11) de sorte que son ouverture est dirigée vers l'ouverture dudit premier plateau (11) de manière à délimiter un espace de germination et de culture (20), des passages (21) pour la ventilation dudit espace de germination et de culture (20) étant associés audit premier plateau (11) et/ou audit second plateau (12),
- un troisième module constitué d'un élément de type plaque (18) lequel est adapté pour fournir, lorsqu'il est assemblé dans ladite première configuration, le couvercle pour fermer ledit second plateau (12), ledit élément de type plaque (18) étant adapté pour fournir, lorsqu'il est assemblé dans ladite seconde configuration, une soucoupe pour ledit premier plateau (11) qui coopère avec ledit au moins un trou traversant (25) formé dans le fond dudit premier plateau (11), **caractérisé en ce que** il comporte en outre des moyens de référence (31) pour l'empilage lesquels sont formés sur une face dudit élément de type plaque (18) qui est dirigé vers l'extérieur lorsqu'il est assemblé dans la première configuration et sur la partie extérieure du fond dudit second plateau (12), lesdits moyens de référence (31) pour l'empilage comportant des poteaux périmétriques (32) lesquels font saillie vers le bas, en référence à la seconde configuration, à partir dudit élément de type plaque (18), et un évidement périmétrique complémentaire (33) formé sur la partie extérieure du fond dudit second plateau (12), sur lequel lesdits poteaux périmétriques (32) sont agencés.

2. Contenant modulaire pour la germination et/ou le stockage de giroflées selon la revendication 1, **caractérisé en ce que** ledit élément de type plaque (18) a, sur la face à agencer en contact avec le fond dudit premier plateau (11), une surface évidée (26) dont le profil de couronne (27), en vue de dessus, est sensiblement mis en forme de manière complémentaire au profil, en vue de dessus, dudit fond dudit premier plateau (11), au moins un creux (28) étant formé sur ladite surface évidée (26), ledit creux, dans ladite seconde configuration, étant centré au niveau de dudit au moins un trou traversant (25) formé dans le fond dudit premier plateau (11), ledit au moins un creux (28) étant relié, par l'intermédiaire d'au moins un canal (29), à au moins une goulotte (30) pour l'alimentation en eau laquelle est formée sur le bord du profil de couronne (27), en vue de dessus, de ladite surface évidée (26).

3. Contenant modulaire pour la germination et/ou le stockage de giroflées selon l'une des revendications précédentes, **caractérisé en ce que** l'élément de type plaque (18) a des couronnes latérales surélevées (19) lesquelles sont adaptées en vue d'un couplage par verrouillage réversible avec la partie d'extrémité supérieure (15) dudit second plateau (12).

4. Contenant modulaire pour la germination et/ou le stockage de giroflées selon l'une des revendications précédentes, **caractérisé en ce que** le bord supérieur (13) dudit premier plateau (11) s'étend latéralement de manière à former une première bande périmétrique sensiblement horizontale (14), la partie d'extrémité supérieure (15) dudit second plateau (12) faisant saillie vers l'extérieur, formant une butée de type palier transversal et un contour de confinement pour ladite première bande périmétrique (14).

5. Contenant modulaire pour la germination et/ou le stockage de giroflées selon la revendication 4, **caractérise en ce que** ladite partie d'extrémité supérieure (15) est constituée d'une deuxième bande périmétrique (16a) laquelle est sensiblement horizontale et sur laquelle ladite première bande périmétrique (14) dudit premier plateau (11) repose, d'une partie montante (16b) laquelle entoure ladite première bande périmétrique (16), et d'une troisième bande périmétrique sensiblement horizontale (16c).

6. Contenant modulaire pour la germination et/ou le stockage de giroflées selon la revendication 5, **caractérisé en ce que** lesdits passages (21) pour la ventilation dudit espace de germination et de culture (20) sont constitués de la combinaison d'évidements (22) formés sur deux parties de ladite première bande périmétrique (14) formée sur des côtés opposés dudit premier plateau (11), ayant des régions plus larges correspondantes (23) qui sont formées sur deux parties de ladite partie montante (16b), lesquelles sont formées sur les côtés mutuellement opposés dudit second plateau (12).

7. Contenant modulaire pour la germination et/ou le stockage de giroflées selon l'une ou plusieurs des revendications précédentes, **caractérisé en ce que** lesdits passages (21) pour la ventilation dudit espace de germination et de culture (20) comportent au moins un trou traversant (24) qui est formé sur le dessus dudit second plateau (12), lequel correspond au fond dudit second plateau en référence à la première configuration.

8. Contenant modulaire pour la germination et/ou le stockage de giroflées selon l'une ou plusieurs des revendications précédentes, **caractérisé en ce que** ledit premier plateau (11), ledit second plateau (12) et ledit élément de type plaque (18) ont un profil rectangulaire en vue de dessus.

9. Contenant modulaire pour la germination et/ou le stockage de giroflées selon la revendication 2, **caractérisé en ce que** des parties de coin (26a) dudit profil de la surface évidée (26) ont une configuration en contre-dépouille qui est complémentaire aux régions de coin correspondantes du fond dudit premier plateau (11) lequel est adapté pour former un couplage de prévention contre l'extraction stable qui est réversible par déformation élastique des parties couplées.
